# EUROPÄISCHE PATENTSCHRIFT

(11) **EP 3 630 591 B1**
(45) Veröffentlichungstag und Bekanntmachung des Hinweises auf die Patenterteilung: **07.07.2021**
(21) Anmeldenummer: 18726441.1
(22) Anmeldetag: 18.05.2018
(51) Int. Cl.: B62M 6/55, B62M 11/02

(54) **FAHRRAD MIT ELEKTRISCHEM ANTRIEB MIT LEISTUNGSVERZWEIGUNG**
BICYCLE HAVING ELECTRIC DRIVE WITH POWER DISTRIBUTION
VÉLO À ENTRAÎNEMENT ÉLECTRIQUE DOTÉ D'UNE DÉRIVATION DE PUISSANCE

(30) Priorität: 23.05.2017 DE 102017208714; 01.09.2017 DE 102017215349
(43) Veröffentlichungstag der Anmeldung: 08.04.2020
(73) Patentinhaber: Mahle International GmbH, 70376 Stuttgart (DE)
(72) Erfinder: DÖPPNER, Enrico, 36137 Grossenlüder (DE); OPLOH, Amir, 85375 Neufahrn (DE); STOLL, Sebastian, 81371 München (DE); WIRTH, Christian, 85742 Mossinning (DE)
(74) Vertreter: BRP Renaud & Partner mbB Rechtsanwälte Patentanwälte Steuerberater
(86) Internationale Anmeldenummer: PCT/EP2018/063134
(87) Internationale Veröffentlichungsnummer: WO 2018/215346

(56) Entgegenhaltungen:
- EP-A1- 2 192 317
- WO-A1-2005/057053
- WO-A1-2016/026241
- DE-A1- 2 750 079

## Beschreibung

Die vorliegende Erfindung betrifft einen elektrischen Antrieb bzw. Hilfsantrieb für ein Fahrrad sowie ein Fahrrad, das mit einem solchen elektrischen Antrieb bzw. Hilfsantrieb ausgestattet ist.

Fahrräder mit elektrischem Antrieb sind allgemein als "e-Bike" bekannt. Der elektrische Antrieb kann dabei als alleiniger Antrieb, also als Hauptantrieb, vorzugsweise jedoch als Hilfsantrieb dienen. Im vorliegenden Zusammenhang wird unter dem Begriff "Antrieb" sowohl ein Hauptantrieb als auch ein Hilfsantrieb verstanden. Bei einem Hilfsantrieb unterstützt der Elektromotor die Antriebsleistung des jeweiligen Fahrradfahrers. Bei einem sogenannten "Pedelec" erfolgt ausschließlich eine solche Antriebsunterstützung. Ein elektromotorisches Antreiben des Fahrrads ohne eine Antriebsleistung des Fahrradfahrers ist bei einem Pedelec nicht vorgesehen. Sofern der Antrieb als Hauptantrieb ausgestaltet ist, lässt sich das Fahrrad auch ausschließlich über den elektrischen Antrieb antreiben. Im vorliegenden Zusammenhang werden unter dem Begriff "Fahrrad" nicht nur Zweiräder, sondern auch Dreiräder oder Vierräder verstanden.

Ein solcher elektrischer Antrieb umfasst üblicherweise einen Elektromotor, der eine Antriebswelle aufweist. Ferner ist eine Abtriebswelle vorgesehen, die drehfest mit einem Treibrad verbunden ist. Das Treibrad dient zum Koppeln mit einem Kettenantrieb oder Riemenantrieb oder einem sonstigen Radantrieb des Fahrrads, der zum Antreiben eines angetriebenen Rads des Fahrrads dient, bei dem es sich üblicherweise um ein Hinterrad des Fahrrads handelt. Mit anderen Worten, im eingebauten Zustand ist das Treibrad über eine Kette oder über einen Riemen oder über eine andere Kopplung mit einem Hinterrad des Fahrrads antriebsverbunden. Ferner umfasst der elektrische Antrieb ein Getriebe, das die Antriebswelle mit der Abtriebswelle antriebsmässig verbindet. Hierdurch lässt sich die vergleichsweise hohe Drehzahl des Elektromotors auf die im Vergleich dazu geringe Drehzahl der Abtriebswelle reduzieren. Gleichzeitig lässt sich das mit Hilfe des Elektromotors bereitgestellte Drehmoment dadurch entsprechend vergrößern. Das Getriebe kann beispielsweise ein Abtriebsrad aufweisen, das in einer Antriebsdrehrichtung drehfest mit der Abtriebswelle verbunden ist. Bei den "Rädern" des Getriebes handelt es sich vorzugsweise um Zahnräder.

Beispiele solcher elektrische Antriebe sind in folgende Dokumenten zu finden: WO 2016/026241 A1, wobei die Merkmale des Oberbegriffs des Anspruchs 1 offenbart werden, DE 27 50 079 A1, EP 2 192 317 A1 und WO 2005/057053 A1.

Sofern der elektrische Antrieb im Bereich einer Tretkurbelwelle angeordnet ist, ist der Durchmesser des Abtriebsrads begrenzt, damit die Bodenfreiheit des Fahrrads nicht beeinträchtigt wird. Dementsprechend müssen auf dieses Abtriebsrad relativ hohe Drehmomente eingeleitet werden. Beispielsweise weist das Getriebe hierzu ein Ausgangsrad auf, das mit dem Abtriebsrad in Eingriff steht. Für die Übertragung großer Drehmomente müssen bei einem herkömmlichen elektrischen Antrieb Abtriebsrad und Ausgangsrad aus Metall bestehen. Metallische Räder sind vergleichsweise teuer und sind häufig Ursache für Geräuschprobleme im Antrieb.

Die vorliegende Erfindung beschäftigt sich mit dem Problem, für einen elektrischen Antrieb der vorstehend beschriebenen Art bzw. für ein damit ausgestattetes Fahrrad eine verbesserte Ausführungsform anzugeben, die sich insbesondere durch eine preiswerte Herstellbarkeit und/oder durch eine reduzierte Geräuschentwicklung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Getriebe mit wenigstens zwei Ausgangsrädern auszustatten, die zum Antreiben des Abtriebsrads dienen und hierzu mit dem Abtriebsrad jeweils für sich in Eingriff stehen. Hierzu sind die wenigstens zwei Ausgangsräder in Umfangsrichtung zueinander versetzt am Umfang des Abtriebsrads angeordnet. Im Getriebe wird außerdem eine Leistungsverzweigung realisiert, die eine Antriebsleistung des Elektromotors auf die wenigstens zwei Ausgangsräder aufteilt. Diese Maßnahmen haben zur Folge, dass das insgesamt auf das Abtriebsrad einzuleitende Drehmoment auf wenigstens zwei Eingriffsstellen aufgeteilt wird, nämlich auf die Eingriffsstellen der wenigstens zwei Ausgangsräder. Hierdurch wird die Belastung des Abtriebsrads und des jeweiligen Ausgangsrads im jeweiligen Eingriff signifikant reduziert. Bei einer gleichmäßigen Leistungsverzweigung auf genau zwei Ausgangsräder halbiert sich das Drehmoment in der jeweiligen Eingriffsstelle. Die wenigstens zwei Ausgangsräder, die im Folgenden als "erstes Ausgangsrad" und "zweites Ausgangsrad" bezeichnet werden, leiten somit jeweils für sich einen Anteil der Antriebsleistung in das Abtriebsrad ein. Durch die signifikant reduzierten Drehmomente an der jeweiligen Eingriffsstelle ist es insbesondere möglich, die Ausgangsräder und/oder das Abtriebsrad aus Kunststoff herzustellen. Insofern lassen sich die Herstellungskosten reduzieren. Darüber hinaus wird die Gefahr einer Geräuschentwicklung reduziert.

Vorteilhaft kann vorgesehen sein, dass eine erste Drehachse, um welche das erste Ausgangsrad dreht, und eine zweite Drehachse, um welche das zweite Ausgangsrad dreht, innerhalb des Getriebes stationär angeordnet sind. Hierdurch wird eine einfach realisierbare, kompakte Bauform erreicht.

Von besonderem Vorteil ist eine Ausführungsform, bei welcher eine erste Drehachse, um welche das erste Ausgangsrad dreht, und eine zweite Drehachse, um welche das zweite Ausgangsrad dreht, geometrisch zwischen einer Abtriebsachse, um welche die Abtriebswelle dreht, und einer Antriebsachse, um welche die Antriebswelle dreht, angeordnet sind. Hierdurch wird zum einen eine kompakte Bauform unterstützt. Zum anderen lässt sich dadurch die Bodenfreiheit für das Fahrrad im Bereich des Antriebs erhöhen. Im eingebauten Zustand ist der Antrieb im Wesentlichen oberhalb einer Tretkurbelwelle des Fahrrads angeordnet, wenn das Fahrrad auf einem Untergrund steht oder fährt. Die Abtriebswelle befindet sich in diesem Einbauzustand im Bereich der Tretkurbelwelle und bildet somit den tiefsten Bereich des Antriebs. Die Ausgangsräder befinden sich im Einbauzustand somit oberhalb der Abtriebswelle und unterhalb der Antriebswelle.

Gemäß einer besonders vorteilhaften Ausführungsform kann das Getriebe ein Planetengetriebe aufweisen. Dieses Planetengetriebe kann nun eingangsseitig mit der Antriebswelle, z.B. über eine entsprechende Verzahnung oder Getriebestufe, und ausgangsseitig über die Leistungsverzweigung mit den Ausgangsrädern gekoppelt ist. Die Leistungsverzeigung ist dann letztlich durch die Ausgangsräder und die Ausgangsseite des Planetengetriebes bzw. durch die Kopplung der Ausgangsräder mit der Ausgangsseite des Planetengetriebes gebildet.

Ein derartiges Planetengetriebe kann ein Sonnenrad, zumindest zwei Planetenräder, einen Planetenträger und ein Hohlrad aufweisen. In üblicher Weise sind das Sonnenrad und das Hohlrad über die am Planetenträger gelagerten Planetenräder miteinander antriebsverbunden. Ein derartiges Planetengetriebe zeichnet sich durch eine extrem kompakte Bauform und großer Übersetzung aus. Innerhalb des Planetengetriebes erfolgt vom Sonnenrad, welches die Eingangsseite des Planetengetriebes bildet, über die Planetenräder auf den Planetenträger und/oder auf das Hohlrad eine interne Leistungsverteilung, die zusätzlich zur fraglichen Leistungsverzeigung vorgesehen ist, welche die ausgangsseitige Antriebsleistung des Planetengetriebes auf die Ausgangsräder verteilt. Die Ausgangsseite des Planetengetriebes ist dabei durch den Planetenträger und/oder das Hohlrad gebildet.

Mit anderen Worten, die hier vorgestellte Leistungsverzweigung, welche die Antriebsleistung auf die Ausgangsräder verteilt, ist zusätzlich zu der Leistungsverteilung vorhanden, die innerhalb des Planetengetriebes ausgebildet ist.

Vorteilhaft ist nun eine Ausführungsform, bei welcher das Hohlrad drehfest mit dem ersten Ausgangsrad verbunden ist. In der Folge wird über den Elektromotor das Sonnenrad angetrieben. Das Hohlrad treibt dann das erste Ausgangsrad mit deutlich reduzierter Drehzahl an.

Besonders vorteilhaft ist eine Weiterbildung, bei welcher der Planetenträger drehfest mit einem Zwischenrad verbunden ist, das mit dem zweiten Ausgangsrad in Eingriff steht. Der bei rotierendem Sonnenrad ebenfalls rotierende Planetenträger wird bei dieser Ausführungsform zum Antreiben des zweiten Ausgangsrads genutzt. Insoweit erfolgt innerhalb des Planetengetriebes die Leistungsverzweigung des Getriebes. Das Zwischenrad wird dabei benötigt, um die Drehrichtung der beiden Ausgangsräder zu synchronisieren. Ferner kann über die Dimensionierung, also über Durchmesser und Zähnezahl, des Zwischenrads und in der Folge auch des zweiten Ausgangsrads, das Verhältnis der Leistungsverzweigung auf die beiden Ausgangsräder eingestellt werden. Bevorzugt ist dabei eine Leistungsverzweigung im Verhältnis 1:1, so dass die beiden Ausgangsräder jeweils 50% der Antriebsleistung auf das Abtriebsrad übertragen.

Eine andere Weiterbildung schlägt vor, dass das Sonnenrad drehfest mit einer Sonnenwelle verbunden ist, die drehfest mit einem Eingangsrad verbunden ist. Die Antriebswelle des Elektromotors ist ihrerseits drehfest mit einem Antriebsrad verbunden, das mit dem Eingangsrad in Eingriff steht. Zweckmäßig ist der Eingriff von Antriebsrad und Eingangsrad als Stirnradgetriebe konfiguriert. Bei einem Stirnradgetriebe stehen die beiden Räder über ihre Verzahnungen radial miteinander in Eingriff. Zweckmäßig ist auch der Eingriff der beiden Ausgangsräder mit dem Abtriebsrad jeweils als Stirnradgetriebe konfiguriert. Auch kann das zweite Ausgangsrad mit dem Zwischenrad ein solches Stirnradgetriebe bilden.

Gemäß einer besonders vorteilhaften Ausführungsform können nun die Ausgangsräder Kunststoffräder sein. Zusätzlich oder alternativ kann das Abtriebsrad ein Kunststoffrad sein. Es ist klar, dass hier faserverstärkte Kunststoffe zum Einsatz kommen können.

Zweckmäßig kann das Abtriebsrad über einen Freilauf mit der Abtriebswelle verbunden sein, der in der Antriebsdrehrichtung ein Drehmoment vom Abtriebsrad auf die Abtriebswelle überträgt und der in einer der Antriebsdrehrichtung entgegengesetzten Gegendrehrichtung eine Relativverdrehung zwischen Abtriebsrad und Abtriebswelle erlaubt. Insbesondere kann sich dadurch die Abtriebswelle in der Antriebsdrehrichtung schneller drehen als das Abtriebsrad.

Eine andere Ausführungsform schlägt vor, dass die Abtriebswelle als Hohlwelle ausgestaltet ist und von einer Tretkurbelwelle koaxial durchsetzt ist. Diese Tretkurbelwelle ist im betriebsbereiten Einbauzustand, also am Fahrrad an ihren Längsenden jeweils mit einer Tretkurbel versehen, wobei die jeweilige Tretkurbel jeweils ein Pedal trägt, so dass der Fahrradfahrer über die Pedale, Tretkurbeln und Tretkurbelwelle seine Antriebsleistung in den Antrieb einbringen kann. Die Tretkurbelwelle ist hierzu in der Antriebsdrehrichtung drehfest mit der Abtriebswelle verbunden.

Vorzugsweise kann die Tretkurbelwelle über einen Freilauf mit der Abtriebswelle verbunden sein, der in der Antriebsdrehrichtung ein Drehmoment von der Tretkurbelwelle auf die Abtriebswelle überträgt und in einer der Antriebsdrehrichtung entgegengesetzten Gegendrehrichtung eine Relativverdrehung zwischen Tretkurbelwelle und Abtriebswelle erlaubt. Mit Hilfe dieses Freilaufs kann die Abtriebswelle in der Antriebsdrehrichtung schneller drehen als die Tretkurbelwelle. Ebenso lässt sich die Tretkurbelwelle mit einer der Drehrichtung der Abtriebswelle entgegengesetzten Drehrichtung drehen.

Eine andere Ausführungsform schlägt vor, dass die Antriebswelle um eine Antriebsachse rotiert, während die Abtriebswelle um eine Abtriebsachse rotiert. Die Anordnung von Elektromotor und Abtriebswelle erfolgt dabei so, dass die Antriebsachse parallel zur Abtriebsachse verläuft, während gleichzeitig ein radialer Abstand zwischen Antriebsachse und Abtriebsachse eingehalten wird. Insbesondere wird der Elektromotor bezogen auf eine Einbausituation am Fahrrad oberhalb der Antriebswelle angeordnet, also an einer von einem Untergrund, auf dem das Fahrrad steht, abgewandten Seite der Abtriebswelle.

In vorliegendem Zusammenhang wird unter einer "Welle" ein körperliches Bauteil verstanden, während unter einer "Achse" eine imaginäre gerade Linie verstanden wird. Bei einer drehenden Welle fällt daher die zugehörige Drehachse mit der Längsmittelachse der Welle zusammen.

Zweckmäßig sind die Ausgangsräder geometrisch zwischen der Antriebswelle und der Abtriebswelle angeordnet. Somit baut das Getriebe abgesehen vom Abtriebsrad ausschließlich oberhalb der Abtriebswelle auf, was der Bodenfreiheit des Fahrrads zu Gute kommt.

Ein erfindungsgemäßes Fahrrad umfasst neben zumindest einem Vorderrad und wenigstens einem Hinterrad eine Tretkurbelwelle, einen Radantrieb, wie z.B. ein Kettenantrieb oder ein Riemenantrieb, sowie einen elektrischen Antrieb der vorstehend beschriebenen Art. Die Tretkurbelwelle kann dabei auch zum Bauumfang des Antriebs gehören. Der Radantrieb dient zum Antreiben eines angetriebenen Rads des Fahrrads, bei dem es sich üblicherweise um ein Hinterrad handelt.

Bevorzugt ist eine Bauform, bei welcher die Ausgangsräder, wenn das Fahrrad auf einem Untergrund steht oder fährt, an einer vom Untergrund abgewandten Seite der Abtriebswelle angeordnet sind. Hierdurch gewinnt das Fahrrad Bodenfreiheit im Bereich des Antriebs.

Besonders vorteilhaft ist eine Bauform, bei welcher das Getriebe abgesehen vom Abtriebsrad oberhalb der Abtriebswelle angeordnet ist, wenn das Fahrrad auf einem Untergrund steht oder fährt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Prinzipdarstellung eines elektrischen Antriebs,
- Fig. 2 bis 4: jeweils eine isometrische Ansicht auf Teile des Antriebs in unterschiedlichen Blickrichtungen.

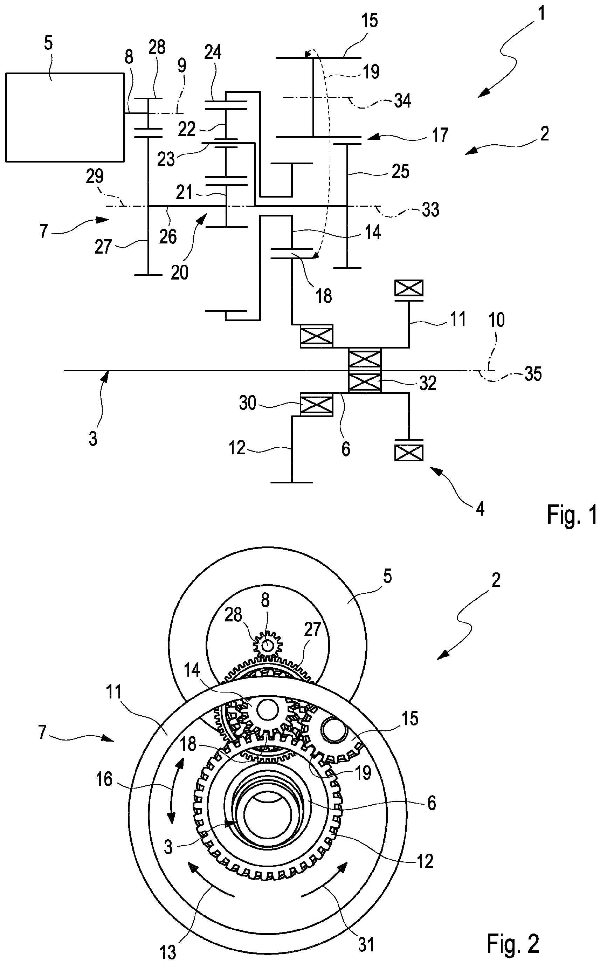

Entsprechend Fig. 1 umfasst ein Fahrrad 1, das hier nur im Bereich eines elektrischen Antriebs 2 dargestellt ist, eine Tretkurbelwelle 3 sowie einen Radantrieb 4, der vorzugsweise als Kettenantrieb 4 oder als Riemenantrieb 4 ausgestaltet ist. Grundsätzlich ist auch ein Kardanantrieb 4 denkbar. Der Radantrieb 4 dient zum Antreiben eines hier nicht gezeigten angetriebenen Rads des Fahrrads 1, bei dem es sich bevorzugt um ein Hinterrad des Fahrrads 1 handelt. Außerdem umfasst das Fahrrad 1 besagten Antrieb 2. Die Tretkurbelwelle 3, die hier zum Bauumfang des Antriebs 2 zählt, ist in fertig montiertem Zustand des Fahrrads 1 an ihren Längsenden jeweils mit einer hier nicht gezeigten Tretkurbel drehfest verbunden, an denen sich jeweils ein hier ebenfalls nicht gezeigtes Pedal befindet.

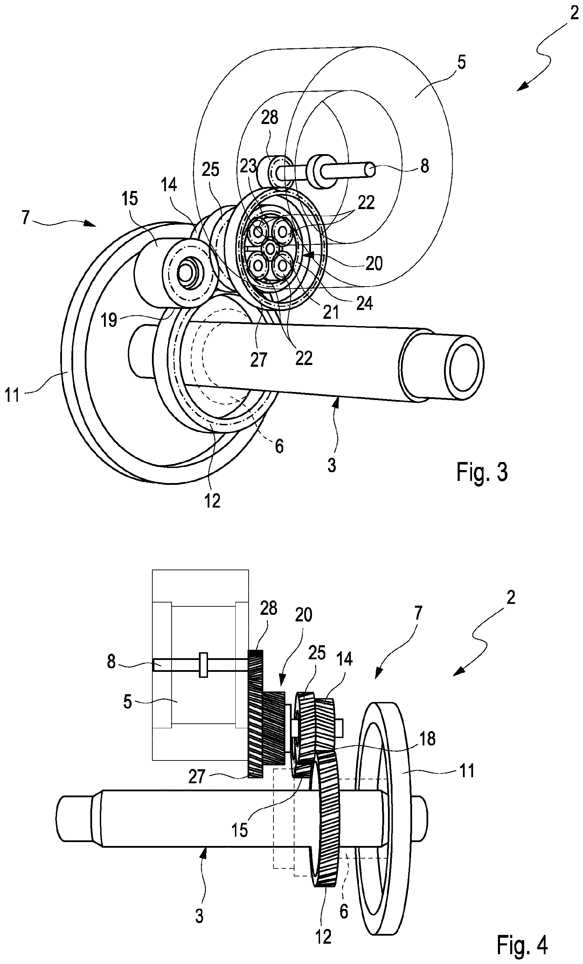

Entsprechend den Fig. 1 bis 4 umfasst der elektrische Antrieb 2 einen Elektromotor 5, eine Abtriebswelle 6 und ein Getriebe 7. Der Elektromotor 5 weist eine Antriebswelle 8 auf, die um eine Antriebsachse 9 rotiert. Die Abtriebswelle 6 rotiert um eine Abtriebsachse 10 und ist mit einem Treibrad 11, vorzugsweise ein Zahnrad, drehfest verbunden. Über das Treibrad 11 ist der Antrieb 2 mit dem Radantrieb 4, insbesondere mit dem Kettenantrieb 4 bzw. mit dem Riemenantrieb 4 bzw. mit dem Kardanantrieb 4 verbunden.

Das Getriebe 7 umfasst ein Abtriebsrad 12, vorzugsweise ein Zahnrad, das in einer in Fig. 2 durch einen Pfeil angedeuteten Antriebsdrehrichtung 13 drehfest mit der Abtriebswelle 6 verbunden ist. Das Abtriebsrad 12 dreht um eine dritte Drehachse 35, die hier mit der Abtriebsachse 10 der Abtriebswelle 6 zusammenfällt. Das Getriebe 7 weist ferner zumindest zwei Ausgangsräder, vorzugsweise jeweils ein Zahnrad, nämlich ein erstes Ausgangsrad 14 und ein zweites Ausgangsrad 15 auf. Bei anderen Beispielen können auch mehr als zwei Ausgangsräder 14, 15 vorhanden sein. Das jeweilige Ausgangsrad 14, 15 dient zum Antreiben des Abtriebsrads 12 und steht hierzu mit dem Abtriebsrad 12 in Eingriff. Die beiden Ausgangsräder 14, 15 sind dabei in der in Fig. 2 durch einen Doppelpfeil angedeuteten Umfangsrichtung 16 des Abtriebsrads 12 zueinander versetzt am Abtriebsrad 12 angeordnet. Das erste Ausgangsrad 14 dreht dabei um eine erste Drehachse 33, während das zweite Ausgangsrad 15 um eine zweite Drehachse 34 dreht. Diese Drehachsen 33, 34 sind stationär, das heißt, die beiden Drehachsen 33, 34 sind innerhalb des Getriebes 7 ortsfest angeordnet. Mit anderen Worten, die beiden Drehachsen 33, 34 verändern während des Betriebs des Antriebs 2 ihre räumliche Position oder Raumlage innerhalb des Getriebes 7 nicht. Das Getriebe 7 ist mit einer Leistungsverzweigung 17 ausgestattet, die es ermöglicht, eine Antriebsleistung des Elektromotors 5 auf die Ausgangsräder 14, 15 zu verteilen.

In Fig. 2 ist gut erkennbar, wie die beiden Ausgangsräder 14, 15 in der Umfangsrichtung 16 voneinander beabstandet jeweils für sich mit dem Abtriebsrad 12 in Eingriff stehen. Hierdurch wird die Belastung der jeweiligen Eingriffsstelle signifikant reduziert. Eine erste Eingriffsstelle zwischen dem ersten Ausgangsrad 14 und dem Abtriebsrad 12 ist dabei mit 18 bezeichnet, während eine zweite Eingriffsstelle zwischen dem zweiten Ausgangsrad 15 und dem Abtriebsrad 12 mit 19 bezeichnet ist. In der stark schematisierten Seitenansicht der Fig. 1 ist die erste Eingriffsstelle 18 zwischen erstem Ausgangsrad 14 und Abtriebsrad 12 unmittelbar erkennbar. Die zweite Eingriffsstelle 19 zwischen zweitem Ausgangsrad 15 und Abtriebsrad 12 ist dagegen in dieser Ansicht nicht unmittelbar erkennbar und dementsprechend durch eine mit unterbrochener Linie angedeutete Wirkverbindung symbolisiert.

Erkennbar ist in Fig. 2 ferner, dass die Ausgangsräder 14, 15 geometrisch zwischen der Antriebswelle 8 und der Abtriebswelle 6 angeordnet sind. Im Einbauzustand des Antriebs 2 befindet sich die Antriebswelle 8 an einer von einem hier nicht gezeigten Untergrund abgewandten Seite der Abtriebswelle 6, wenn das Fahrrad 1 auf diesem Untergrund steht oder fährt. In der Folge befindet sich abgesehen vom Abtriebsrad 12 das gesamte übrige Getriebe 7 oberhalb der Abtriebswelle 6.

Beim hier gezeigten, bevorzugten Beispiel weist das Getriebe 7 ein Planetengetriebe 20 auf. Dieses Planetengetriebe 20 weist ein Sonnenrad 21, mindestens zwei Planetenräder 22, einen Planetenträger 23 sowie ein Hohlrad 24 auf, alle Räder sind vorzugsweise Zahnräder. Das Sonnenrad 21 ist koaxial im Hohlrad 24 angeordnet und ist über die Planetenräder 22 mit diesem antriebsverbunden. Hierzu stehen die Planetenräder 22 radial innen mit dem Sonnenrad 21 und radial außen mit dem Hohlrad 24 in Eingriff. Im Beispiel sind genau vier Planetenräder 22 vorgesehen.

Das Sonnenrad 24 ist drehfest mit dem ersten Ausgangsrad 14 verbunden. In der Folge treibt das Sonnenrad 24 über das erste Ausgangsrad 14 das Abtriebsrad 12 an. Ferner ist hier vorgesehen, dass der Planetenträger 23 drehfest mit einem Zwischenrad 25 verbunden ist, wobei dieses Zwischenrad 25 mit dem zweiten Ausgangsrad 15 in Eingriff steht. Somit treibt der Planetenträger 23 über das Zwischenrad 25 und das zweite Ausgangsrad 15 ebenfalls das Abtriebsrad 12 an. Zweckmäßig ist die Leistungsverzweigung 17 so konzipiert, dass sich die Leistung des Elektromotors 5 hälftig auf die beiden Ausgangsräder 14, 15 verteilt. Hierzu ist das Zwischenrad 25 hinsichtlich Durchmesser und Zähnezahl so gewählt, dass sich für die beiden Ausgangsräder 14, 15 eine Synchronisation in Drehrichtung und Drehzahl ergibt.

Zweckmäßig ist das Sonnenrad 21 drehfest mit einer Sonnenwelle 26 verbunden, die ihrerseits drehfest mit einem Eingangsrad 27, vorzugsweise ein Zahnrad, verbunden ist. Die Antriebswelle 8 des Elektromotors 5 ist mit einem Antriebsrad 28, vorzugsweise ein Zahnrad, drehfest verbunden, das mit dem Eingangsrad 27 in Eingriff steht. Die Sonnenwelle 26 erstreckt sich dabei koaxial zu einer Sonnenachse 29 des Planetengetriebes 20, die parallel zur Antriebsachse 9 und zur Abtriebsachse 10 verläuft.

Durch die reduzierte mechanische Belastung der Eingriffsstellen 18, 19 ist es gemäß einer vorteilhaften Ausführungsform möglich, die beiden Ausgangsräder 14, 15 und/oder das Abtriebsrad 12 als Kunststoffräder auszugestalten.

Vorteilhaft ist das Abtriebsrad 12 über einen Freilauf 30 mit der Abtriebswelle 6 verbunden. Dieser Freilauf 30 überträgt in der Antriebsdrehrichtung 13 ein Drehmoment vom Abtriebsrad 12 auf die Abtriebswelle 6. In einer in Fig. 2 durch einen Pfeil angedeuteten Gegendrehrichtung 31, die der Antriebsdrehrichtung 13 entgegengesetzt orientiert ist, lässt der Freilauf 30 dagegen Relativverdrehungen zwischen Abtriebsrad 12 und Abtriebswelle 6 zu. Hierdurch kann beispielsweise die Abtriebswelle 6 in der Antriebsdrehrichtung 13 rotieren, während das Abtriebsrad 12 steht oder mit einer geringeren Drehzahl als die Abtriebswelle 6 in der Antriebsdrehrichtung 13 rotieren.

Zweckmäßig ist die Abtriebswelle 6 als Hohlwelle ausgestaltet und von der Tretkurbelwelle 3 koaxial durchsetzt. Die Tretkurbelwelle 3 ist in der Antriebsdrehrichtung 13 drehfest mit der Abtriebswelle 6 verbunden. Zweckmäßig ist die Tretkurbelwelle 3 über einen weiteren Freilauf 32 mit der Abtriebswelle 6 verbunden. Dieser weitere Freilauf 32 funktioniert wie der zuvor beschriebene Freilauf 30 zwischen Abtriebsrad 12 und Abtriebswelle 6. Dementsprechend überträgt der weitere Freilauf 32 in der Antriebsdrehrichtung 13 ein Drehmoment von der Tretkurbelwelle 3 auf die Abtriebswelle 6, während er in der Gegendrehrichtung 31 eine Relativverdrehung zwischen Tretkurbelwelle 3 und Abtriebswelle 6 zulässt. Hierdurch kann die Abtriebswelle 6 in der Antriebsdrehrichtung 13 rotieren, während die Tretkurbelwelle 3 steht oder in der Gegendrehrichtung 31 rotiert oder in der Antriebsdrehrichtung 13 mit einer geringeren Drehzahl als die Abtriebswelle 6 rotiert.

Zweckmäßig verlaufen Antriebsachse 9 und Abtriebsachse 10 parallel zueinander, jedoch zueinander radial beabstandet. Auch die Sonnenachse 29 erstreckt sich parallel zur Antriebsachse 9 und parallel zur Abtriebsachse 10. Insbesondere erstreckt sich die Sonnenachse 29 dabei geometrisch zwischen der Antriebsachse 9 und der Abtriebsachse 10. Wie sich Fig. 2 entnehmen lässt, können sich Antriebsachse 9, Abtriebsachse 10 und Sonnenachse 29 vorzugsweise in einer gemeinsamen Ebene erstrecken. Ferner erfolgt die Anordnung von Elektromotor 9 und Getriebe 7 derart, dass die Ausgangsräder 14, 15 geometrisch zwischen der Antriebswelle 9 und der Abtriebswelle 6 angeordnet sind. Im Einbauzustand liegen die Ausgangsräder 14, 15 oberhalb der Abtriebswelle 6. Der Elektromotor 5, ebenfalls oberhalb der Abtriebswelle 6, treibt die Antriebswelle 8 an. Zweckmäßig ist die Antriebswelle 8 dabei Bestandteil eines innenliegenden Rotors des Elektromotors 5.

## Patentansprüche

1. Elektrischer Antrieb (2) für ein Fahrrad (1),
- mit einem Elektromotor (5), der eine Antriebswelle (8) aufweist,
- mit einer Abtriebswelle (6), die drehfest mit einem Treibrad (11) zum Koppeln mit einem Radantrieb (4) des Fahrrads (1) verbunden ist,
- mit einem Getriebe (7), das die Antriebswelle (8) mit der Abtriebswelle (6) antriebsmäßig verbindet,
- **dadurch gekennzeichnet dass** das Getriebe (7) ein Abtriebsrad (12), das in einer Antriebsdrehrichtung (13) drehfest mit der Abtriebswelle (6) verbunden ist, und wenigstens zwei Ausgangsräder, nämlich ein erstes Ausgangsrad (14) und ein zweites Ausgangsrad (15) aufweist, die zum Antreiben des Abtriebsrads (12) in Umfangsrichtung (16) zueinander versetzt jeweils mit dem Abtriebsrad (12) in Eingriff stehen,
- und dadurch dass das Getriebe (7) eine Leistungsverzweigung (17) aufweist, die eine Antriebsleistung des Elektromotors (5) auf die Ausgangsräder (14, 15) aufteilt.

2. Antrieb (2) nach Anspruch 1,
**dadurch gekennzeichnet,**
**dass** das Getriebe (7) ein Planetengetriebe (20) aufweist, das eingangsseitig mit der Antriebswelle (8) und ausgangsseitig über die Leistungsverzweigung (17) mit den Ausgangsrädern (14, 15) gekoppelt ist.

3. Antrieb (2) nach Anspruch 1 oder 2,
**dadurch gekennzeichnet,**
**dass** eine erste Drehachse (33), um welche das erste Ausgangsrad (14) dreht, und eine zweite Drehachse (34), um welche das zweite Ausgangsrad (15) dreht, innerhalb des Getriebes (7) stationär angeordnet sind.

4. Antrieb (2) nach einem der vorhergehenden Ansprüche,
**dadurch gekennzeichnet,**
**dass** eine erste Drehachse (33), um welche das erste Ausgangsrad (14) dreht, und eine zweite Drehachse (34), um welche das zweite Ausgangsrad (15) dreht, geometrisch zwischen einer Abtriebsachse (10), um welche die Abtriebswelle (6) dreht, und einer Antriebsachse (9), um welche die Antriebswelle (8) dreht, angeordnet sind.

5. Antrieb (2) nach einem der vorhergehenden Ansprüche,
**dadurch gekennzeichnet,**
- **dass** das Getriebe (7) ein Planetengetriebe (20) aufweist, das ein Sonnenrad (21), mindestens zwei Planetenräder (22), einen Planetenträger (23) und ein Hohlrad (24) aufweist,
- **dass** das Hohlrad (24) drehfest mit dem ersten Ausgangsrad (14) verbunden ist.

6. Antrieb (2) nach Anspruch 5,
**dadurch gekennzeichnet,**
**dass** der Planetenträger (23) drehfest mit einem Zwischenrad (25) verbunden ist, das mit dem zweiten Ausgangsrad (15) in Eingriff steht.

7. Antrieb (2) nach Anspruch 5 oder 6,
**dadurch gekennzeichnet,**
- **dass** das Sonnenrad (21) drehfest mit einer Sonnenwelle (26) verbunden ist, die drehfest mit einem Eingangsrad (27) verbunden ist,
- **dass** die Antriebswelle (8) drehfest mit einem Antriebsrad (28) verbunden ist, das mit dem Eingangsrad (27) in Eingriff steht.

8. Antrieb (2) nach einem der vorhergehenden Ansprüche,
**dadurch gekennzeichnet,**
**dass** die Ausgangsräder (14, 15) Kunststoffräder sind.

9. Antrieb (2) nach einem der vorhergehenden Ansprüche,
**dadurch gekennzeichnet,**
**dass** das Abtriebsrad (12) über einen Freilauf (30) mit der Abtriebswelle (6) verbunden ist, der in der Antriebsdrehrichtung (13) ein Drehmoment vom Abtriebsrad (12) auf die Abtriebswelle (6) überträgt und in einer der Antriebsdrehrichtung (13) entgegengesetzten Gegendrehrichtung (31) eine Relativverdrehung zwischen Abtriebsrad (12) und Abtriebswelle (6) erlaubt.

10. Antrieb (2) nach einem der vorhergehenden Ansprüche,
**dadurch gekennzeichnet,**
- **dass** die Abtriebswelle (6) als Hohlwelle ausgestaltet ist und von einer Tretkurbelwelle (3) koaxial durchsetzt ist,
- **dass** die Tretkurbelwelle (3) in der Antriebsdrehrichtung (13) drehfest mit der Abtriebswelle (6) verbunden ist.

11. Antrieb (2) nach Anspruch 10,
**dadurch gekennzeichnet,**
**dass** die Tretkurbelwelle (3) über einen Freilauf (32) mit der Abtriebswelle (6) verbunden ist, der in der Antriebsdrehrichtung (13) ein Drehmoment von der Tretkurbelwelle (3) auf die Abtriebswelle (6) überträgt und in einer der Antriebsdrehrichtung (13) entgegengesetzten Gegendrehrichtung (31) eine Relativverdrehung zwischen der Tretkurbelwelle (3) und der Abtriebswelle (6) erlaubt.

12. Antrieb (2) nach einem der vorhergehenden Ansprüche,
**dadurch gekennzeichnet,**
- **dass** die Antriebswelle (8) um eine Antriebsachse (9) rotiert,
- **dass** die Abtriebswelle (6) um eine Abtriebsachse (10) rotiert,
- **dass** die Antriebsachse (9) parallel zur Abtriebsachse (10) verläuft und dazu radial beabstandet angeordnet ist.

13. Antrieb (2) nach einem der vorhergehenden Ansprüche,
**dadurch gekennzeichnet,**
**dass** die Ausgangsräder (14, 15) geometrisch zwischen der Antriebswelle (8) und der Abtriebswelle (6) angeordnet sind.

14. Fahrrad (1),
- mit einer Tretkurbelwelle (3),
- mit einem Radantrieb (4) zum Antreiben eines angetriebenen Rads des Fahrrads (1)"
- mit einem elektrischen Antrieb (2) nach einem der vorhergehenden Ansprüche.

15. Fahrrad (1) nach Anspruch 14,
**dadurch gekennzeichnet,**
**dass** bei auf einem Untergrund stehendem oder fahrendem Fahrrad (1) die Ausgangsräder (14, 15) an einer vom Untergrund abgewandten Seite der Abtriebswelle (6) angeordnet sind.

16. Fahrrad nach Anspruch 14 oder 15,
**dadurch gekennzeichnet,**
**dass** bei auf einem Untergrund stehendem oder fahrendem Fahrrad (1) das Getriebe (7) abgesehen vom Abtriebsrad (12) oberhalb der Abtriebswelle (6) angeordnet ist.

## Claims

1. Electrical drive (2) for a bicycle (1),
- with an electric motor (5), which has a drive shaft (8),
- with a driven shaft (6), which is connected to a driving gear (11) for conjoined rotation in order to couple same with a wheel drive (4) of the bicycle (1),
- with a transmission (7), which drivingly connects the drive shaft (8) to the driven shaft (6),
**characterised in that**
- the transmission (7) has a driven gear (12), which is connected in a drive direction of rotation (13) for conjoined rotation with the driven shaft (6), and at least two output gears, namely a first output gear (14) and a second output gear (15), which each mesh with the driven gear (12), offset from one another in the circumferential direction (16), in order to drive the driven gear (12),
and **in that**
- the transmission (7) has a power split (17), which divides a drive power of the electric motor (5) to the output gears (14, 15).

2. Drive (2) according to claim 1,
**characterised in that**
the transmission (7) has a planetary gearing (20), which is coupled on the input side with the drive shaft (8) and on the output side via the power split (17) with the output gears (14, 15).

3. Drive (2) according to claim 1 or 2,
**characterised in that**
a first axis of rotation (33), about which the first output gear (14) rotates, and a second axis of rotation (34), about which the second output gear (15) rotates, are arranged in a stationary manner inside the transmission (7).

4. Drive (2) according to any one of the preceding claims,
**characterised in that**
a first axis of rotation (33), about which the first output gear (14) rotates, and a second axis of rotation (34), about which the second output gear (15) rotates, are arranged geometrically between a driven axis (10), about which the driven shaft (6) rotates, and a drive axis (9), about which the drive shaft (8) rotates.

5. Drive (2) according to any one of the preceding claims,
**characterised in that**
- the transmission (7) has a planetary gearing (20), which has a sun gear (21), at least two planetary gears (22), a planet carrier (23) and a ring gear (24).
- the ring gear (24) is connected for conjoined rotation with the first output gear (14).

6. Drive (2) according to claim 5,
**characterised in that**
the planet carrier (23) is connected for conjoined rotation with an intermediate gear (25), which meshes with the second output gear (15).

7. Drive (2) according to claim 5 or 6,
**characterised in that**
- the sun gear (21) is connected for conjoined rotation with a sun shaft (26), which is connected for conjoined rotation with an input gear (27),
- the drive shaft (8) is connected for conjoined rotation with a drive gear (28), which meshes with the input gear (27).

8. Drive (2) according to any one of the preceding claims,
**characterised in that**
the output gears (14, 15) are plastic gears.

9. Drive (2) according to any one of the preceding claims,
**characterised in that**
the driven gear (12) is connected via a freewheel (30) to the driven shaft (6), which transmits a torque in the drive direction of rotation (13), from the driven gear (12) to the driven shaft (6) and, in a counter-rotation direction (31) opposite to the drive direction of rotation (13), allows a relative rotation between the driven gear (12) and driven shaft (6).

10. Drive (2) according to any one of the preceding claims,
**characterised in that**
- the driven shaft (6) is designed as a hollow shaft and is coaxially penetrated by a pedal crankshaft (3),
- the pedal crankshaft (3) is connected for conjoined rotation with the driven shaft (6) in the drive direction of rotation (13).

11. Drive (2) according to claim 10,
**characterised in that**
the pedal crankshaft (3) is connected via a freewheel (32) to the driven shaft (6), which transmits a torque in the drive direction of rotation (13), from the pedal crankshaft (3) to the driven shaft (6) and, in a counter-rotation direction (31) opposite to the drive direction of rotation (13), allows a relative rotation between the pedal crankshaft (3) and the driven shaft (6).

12. Drive (2) according to any one of the preceding claims,
**characterised in that**
- the drive shaft (8) rotates about a drive axis (9),
- the driven shaft (6) rotates about a driven axis (10),
- the drive axis (9) runs parallel to the driven axis (10) and is arranged radially at a distance therefrom.

13. Drive (2) according to any one of the preceding claims,
**characterised in that**
the output gears (14, 15) are arranged geometrically between the drive shaft (8) and the driven shaft (6).

14. Bicycle (1),
- with a pedal crankshaft (3),
- with a wheel drive (4) for driving a driven wheel of the bicycle (1),
- with an electrical drive (2) according to any one of the preceding claims.

15. Bicycle (1) according to claim 14,
**characterised in that**
when the bicycle (1) is standing or moving on a ground, the output gears (14, 15) are arranged on a side of the driven shaft (6) facing away from the ground.

16. Bicycle according to claim 14 or 15,
**characterised in that**
when the bicycle (1) is standing or moving on a ground, the transmission (7), apart from the driven gear (12) is arranged above the driven shaft (6).

## Revendications

1. Entraînement électrique (2) pour une bicyclette (1),
- avec un moteur électrique (5), qui présente un arbre d'entraînement (8),
- avec un arbre de sortie (6), qui est relié de manière solidaire en rotation à une roue motrice (11) pour l'accouplement à un entraînement de roue (4) de la bicyclette (1),
- avec une transmission (7), qui relie l'arbre d'entraînement (8) à l'arbre de sortie (6) pour permettre l'entraînement,
- **caractérisé en ce que**
la transmission (7) présente une roue menée (12), qui est reliée de manière solidaire en rotation à l'arbre de sortie (6) dans un sens de rotation d'entraînement (13), et au moins deux pignons de sortie, à savoir un premier pignon de sortie (14) et un second pignon de sortie (15), qui sont respectivement en prise avec la roue menée (12) de manière décalée l'un de l'autre dans la direction périphérique (16) pour l'entraînement de la roue menée (12),
- et **en ce que**
la transmission (7) présente une dérivation de puissance (17), qui répartit une puissance d'entraînement du moteur électrique (5) sur les pignons de sortie (14, 15).

2. Entraînement (2) selon la revendication 1,
**caractérisé en ce que**
la transmission (7) présente un engrenage planétaire (20), qui est accouplé côté entrée à l'arbre d'entraînement (8) et côté sortie aux pignons de sortie (14, 15) par l'intermédiaire de la dérivation de puissance (17).

3. Entraînement (2) selon la revendication 1 ou 2,
**caractérisé en ce qu'**
un premier axe de rotation (33), autour duquel le premier pignon de sortie (14) tourne, et un second axe de rotation (34), autour duquel le second pignon de sortie (15) tourne, sont disposés de manière fixe à l'intérieur de la transmission (7).

4. Entraînement (2) selon l'une quelconque des revendications précédentes, **caractérisé en ce qu'**
un premier axe de rotation (33), autour duquel le premier pignon de sortie (14) tourne, et un second axe de rotation (34), autour duquel le second pignon de sortie (15) tourne, sont disposés de manière géométrique entre un axe de sortie (10), autour duquel l'arbre de sortie (6) tourne, et un axe d'entraînement (9), autour duquel l'arbre d'entraînement (8) tourne.

5. Entraînement (2) selon l'une quelconque des revendications précédentes, **caractérisé en ce que**
- la transmission (7) présente un engrenage planétaire (20), qui présente un pignon planétaire (21), au moins deux satellites (22), un porte-satellite (23) et une couronne (24),
- la couronne (24) est reliée de manière solidaire en rotation au premier pignon de sortie (14).

6. Entraînement (2) selon la revendication 5,
**caractérisé en ce que**
le porte-satellite (23) est relié de manière solidaire en rotation à un pignon intermédiaire (25), qui est en prise avec le second pignon de sortie (15).

7. Entraînement (2) selon la revendication 5 ou 6,
**caractérisé en ce que**
- le pignon planétaire (21) est relié de manière solidaire en rotation à un arbre planétaire (26), qui est relié de manière solidaire en rotation à un pignon d'entrée (27),
- l'arbre d'entraînement (8) est relié de manière solidaire en rotation à une roue d'entraînement (28), qui est en prise avec le pignon d'entrée (27).

8. Entraînement (2) selon l'une quelconque des revendications précédentes, **caractérisé en ce que**
les pignons de sortie (14, 15) sont des pignons en matière plastique.

9. Entraînement (2) selon l'une quelconque des revendications précédentes, **caractérisé en ce que**
la roue menée (12) est reliée à l'arbre de sortie (6) par l'intermédiaire d'une roue libre (30), qui, dans le sens de rotation d'entraînement (13), transmet un couple de la roue menée (12) à l'arbre de sortie (6) et, dans un sens de rotation antagoniste (31) opposé au sens de rotation d'entraînement (13), permet une rotation relative entre la roue menée (12) et l'arbre de sortie (6).

10. Entraînement (2) selon l'une quelconque des revendications précédentes, **caractérisé en ce que**
- l'arbre de sortie (6) est conçu en tant qu'arbre creux et est traversé coaxialement par un arbre de pédalier (3),
- l'arbre de pédalier (3) dans le sens de rotation d'entraînement (13) est relié de manière solidaire en rotation à l'arbre de sortie (6).

11. Entraînement (2) selon la revendication 10,
**caractérisé en ce que**
l'arbre de pédalier (3) est relié à l'arbre de sortie (6) par l'intermédiaire d'une roue libre (32), qui, dans le sens de rotation d'entraînement (13), transmet un couple de l'arbre de pédalier (3) à l'arbre de sortie (6) et, dans un sens de rotation antagoniste (31) opposé au sens de rotation d'entraînement (13), permet une rotation relative entre l'arbre de pédalier (3) et l'arbre de sortie (6).

12. Entraînement (2) selon l'une quelconque des revendications précédentes, **caractérisé en ce que**
- l'arbre d'entraînement (8) tourne autour d'un axe d'entraînement (9),
- l'arbre de sortie (6) tourne autour d'un axe de sortie (10),
- l'axe d'entraînement (9) s'étend parallèlement à l'axe de sortie (10) et est disposé radialement à distance de celui-ci.

13. Entraînement (2) selon l'une quelconque des revendications précédentes, **caractérisé en ce que**
les pignons de sortie (14, 15) sont disposés de manière géométrique entre l'arbre d'entraînement (8) et l'arbre de sortie (6).

14. Bicyclette (1),
- avec un arbre de pédalier (3),
- avec un entraînement de roue (4) pour l'entraînement d'une roue entraînée de la bicyclette (1),
- avec un entraînement électrique (2) selon l'une quelconque des revendications précédentes.

15. Bicyclette (1) selon la revendication 14,
**caractérisée en ce que**
lorsque la bicyclette (1) se tient ou circule sur un sol, les pignons de sortie (14, 15) sont disposés sur une face de l'arbre de sortie (6) opposée au sol.

16. Bicyclette selon la revendication 14 ou 15,
**caractérisée en ce que**
lorsque la bicyclette (1) se tient ou circule sur un sol, la transmission (7), hormis la roue menée (12), est disposée au-dessus de l'arbre de sortie (6).
